# EUROPÄISCHE PATENTSCHRIFT

(11) **EP 0 581 126 B1**
(45) Veröffentlichungstag und Bekanntmachung des Hinweises auf die Patenterteilung: **11.11.1998**
(21) Anmeldenummer: 93111345.0
(22) Anmeldetag: 15.07.1993
(51) Int. Cl.: B60H 1/32, B60H 3/00

(54) **Einrichtung zur Klimakontrolle im Kraftfahrzeug**
Arrangement for air conditioning control in a motor car
Dispositif pour contrôler la climatisation dans un véhicule à moteur

(30) Priorität: 30.07.1992 DE 4225145
(43) Veröffentlichungstag der Anmeldung: 02.02.1994
(73) Patentinhaber: DORNIER GMBH, D-88004 Friedrichshafen (DE)
(72) Erfinder: Kronmüller, Uwe, Dipl.-Ing., D-88709 Meersburg (DE); Scherber, Werner, Dr., D-88697 Bermatingen (DE)
(74) Vertreter: Landsmann, Ralf, Dipl.-Ing.

(56) Entgegenhaltungen:
- EP-A- 254 114
- DE-A- 3 807 602
- DE-A- 4 028 986
- DE-A- 4 035 062
- US-A- 4 549 406
- US-A- 4 920 759

## Beschreibung

Die Erfindung betrifft eine Einrichtung zur Klimakontrolle im Kraftfahrzeug, insbesondere bei starker Sonneneinstrahlung.

Die Aufheizung eines geparkten Fahrzeuges bei sommerlicher Sonneneinstrahlung ist ein seit langem bekanntes Problem, welches mit dem Trend zu immer größeren und immer stärker geneigten Glasscheiben zunehmende Dringlichkeit erfährt.

Leicht getönte Scheiben bringen eine kaum spürbare Veränderung. Stark eingefärbte oder reflektierende Scheiben sind nur im hinteren Fahrzeugbereich zugelassen und auch dort wird ihr Einsatz aus ästhetischen und sicherheitstechnischen Gründen nicht allgemein akzeptiert. Derartige Maßnahmen zur Reduzierung der Sonneneinstrahlung führen in erster Linie zu einer langsameren Aufheizung, die resultierende Endtemperatur im Gleichgewichtszustand wird dadurch nur verhältnismäßig wenig beeinflusst.

Auch die als Zubehör erhältlichen Abschirmmaßnahmen wie Jalousien, wie Rollos oder Blenden, stellten sich bei genauerer Messung als wirkungsarm dar. Sie schwächen zwar die Einstrahlung, zum Teil sogar erheblich, so daß die Aufheizung langsamer erfolgt, gleichzeitig isolieren sie aber den Innenraum, da sie im Abstand zu den Scheiben stehen und die Wärmeabgabe über Scheiben an die Umgebung behindern.

Dokument DE 38 07 602 A1 beschreibt eine Vorrichtung zur Abführung der Sonnenwärme, wobei unter den Fahrzeugfenstern (Frontscheibe und/oder Heckscheibe) ein Strahlungsabsorber, z.B. in Gestalt einer dunklen Fläche, angeordnet ist, sodaß die entstehende Wärme auf direktem Weg nach aussen abgeführt werden kann und nicht zur Erwärmung des Luftraums im Innenraum des Fahrzeugs beiträgt.

Dokument DE-A-4 035 062 offenbart, einen Teil des Innenraumes eines Fahrzeuges mit einer IR-reflektierenden Oberfläche auszustatten, um die Aufheizung durch Sonnenstrahlung zu mindern. Auf Seite 2 ab Zeile 19 ist angegeben, dass die IR-reflektierende Eigenschaft im Wellenlängenbereich von 700 bis 3000 nm, vorzugsweise bei 720 bis 2500 nm bestehen sollte. Der Sinn dieser Maßnahme besteht darin, die Sonnenstrahlung (400 - 3000 nm) im sogenannten Nahen Infrarot NIR, also im nicht sichtbaren Teil des Sonnenspektrums, zurückzuwerfen und damit die Temperatur der bestrahlten Oberfläche etwas abzusenken. Die Wirkung dieser Maßnahme ist allerdings sehr gering bis vernachlässigbar, da der reflektierte Anteil an anderen Stellen des Innenraumes absorbiert wird und deshalb die Gesamtwärmebilanz des Systems nahezu nicht verändert wird.

Aufgabe der Erfindung ist es, nicht nur die Aufheizgeschwindigkeit, sondern die Endtemperatur oder Maximaltemperatur des stehenden Fahrzeuges merkbar abzusenken.

Diese Aufgabe wird durch den Gegenstand des Hauptanspruchs gelöst Die Unteransprüche sind vorteilhafte Ausgestaltungen der Erfindung.

Die Erfindung wird nachfolgend anhand von Figuren näher erläutert.

Es zeigen:

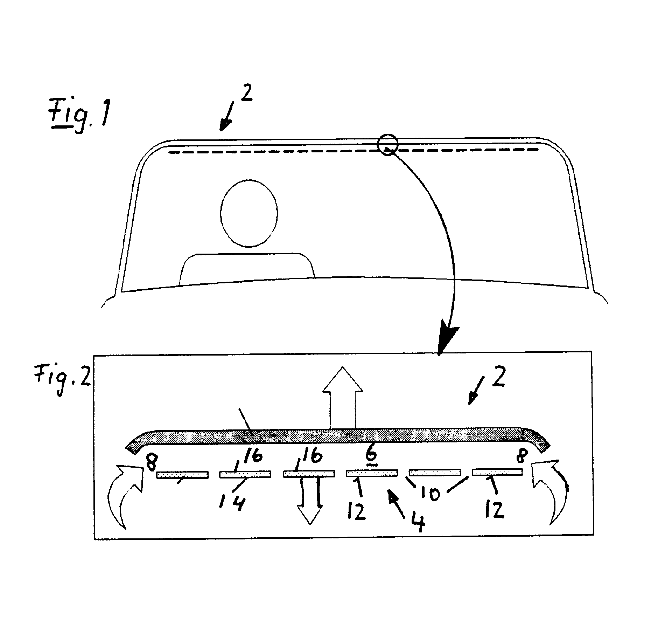

Fig. 1 den Innenraum eines Kraftfahrzeuges in prinzipieller Darstellung,
Fig. 2 die erfindungsgemäße Gestaltung des Dachbereichs und
Fig. 3 den Temperaturverlauf im Innenraum eines Kraftfahrzeuges.

Die wichtigste Maßnahme der Erfindung besteht in einer speziellen Gestaltung der Dachverkleidung 2. Das Prinzip wird anhand der Fig. 2 erläutert. Im Gegensatz zur üblichen Ausführung des Himmels in Form einer massiven, fest anliegenden Kunststoffschale mit thermisch isolierender Wirkung (nicht gezeigt), wird eine abgehängte Schale 4 mit freier Hinterlüftung 6 und mit ausreichenden Lüftungsschlitzen 8 oder Durchbrechungen 10 eingesetzt. Zugleich besitzt die Unterseite 12 der Verkleidung 2 eine Oberfläche 14 mit niedrigem Wärmeemissionsgrad ε_{iR} zwischen 5 % bis 15 %. Wahlweise kann auch die Oberseite 16 der Verkleidung 2 niedrigemittierend sein, was sich jedoch nur in der Aufheizphase bei dunkler Wagenfarbe geringfügig auswirkt. Diese niedrigemittierende Beschichtung 14 (abgekürzt LE-Schicht, low emission) der Unterseite 12 bewirkt, daß aus dem Dachbereich, als die wärmste Zone des Fahrzeuges, keine Abstrahlung nach unten auf die Sitze und den Boden erfolgt. Die durch Sonneneinstrahlung eingebrachte und im Fahrzeug eingeschlossene Wärme sammelt sich aufgrund der natürlichen Konvektion oben unter dem Dach. Die LE-Schicht verstärkt die Temperaturschichtung im Innenraum: Im unteren Bereich bleibt es kühler, weniger Wärme wird in den dort liegenden Materialien gespeichert, im oberen Bereich der Scheiben und des Daches, wo wenig Masse vorhanden ist, steigt die Temperatur schnell auf hohe Werte an und kann dadurch effektiver durch Strahlung und Konvektion nach außen abgeführt werden.

Die Dachfläche wird durch diese Maßnahme als natürliche Kühlerfläche des Innenraumes benutzt. Wichtig ist, daß die heiße aufsteigende Luft ungehindert Zugang zur äußeren Dachhaut hat und dort Wärme abgeben kann. Die bisher angewendete Isolierung des Daches behindert den Kühleffekt.

Durch zusätzliche Maßnahmen ähnlicher Art an den Scheiben, den Türholmen und den seitlichen Karosserieteilen kann die Wirkung weiter gesteigert werden.:
- Die innenseitige Beschichtung der Scheiben mit einer niedrigemittierenden transparenten Beschichtung verhindert ebenfalls die Rückstrahlung in den Innenraum. Die Scheiben werden wärmer, die nach außen abgeführte Wärmemenge wird größer. Entsprechende LE-Schichten für Gläser sind nach dem Stand der Technik aus dem Bereich der Wärmeschutzverglasung bekannt. Der Einsatz von Isolierglas (Doppelscheiben) bei Kfz hätte allerdings die umgekehrte Wirkung.
- Durch Einbau von Lüftungsschlitzen im Dachbereich, welche die erwärmte Luft durch natürliche Konvektion direkt nach außen führen, wird der Effekt der Temperaturschichtung besonders gut genützt und die Gesamtkühlleistung weiter verbessert.
- Günstig im Sinne der Erfindung wirkt sich eine möglichst helle Verkleidung im unteren Bereich aus, also an den Türen und den Sitzbezügen und eine dunkle Farbgebung der Dachverkleidung - entgegen der üblichen Praxis. Diese Maßnahme fördert die Temperaturschichtung im Innenraum und damit wiederum den gewünschten passiven Kühleffekt.

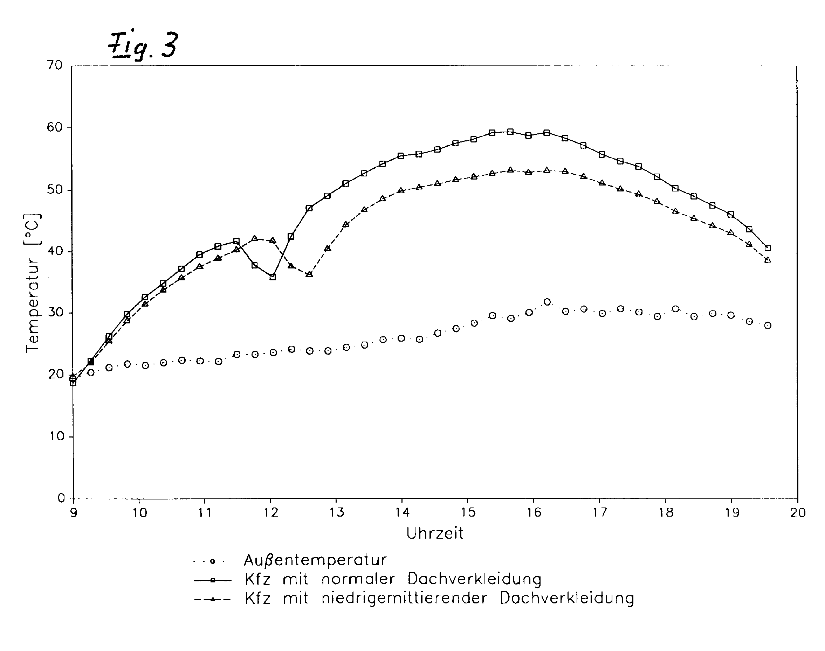

Die Auswirkung der Erfindung auf die (reale) Innenraumtemperatur wurde mit einem einfachen Versuch bestätigt. Verglichen wurden zwei dunkelgrüne Serienfahrzeuge (Mercedes-Benz, Typ 190), wobei in einem Fahrzeug die normale Dachverkleidung mit AI-Folie abgeklebt wurde. In beiden Fahrzeugen wurden alle Fenster mit AI-Folie abgedeckt, um den Einfluß des Daches herauszuheben. Fig. 3 zeigt den Tagesverlauf der in Kopfhöhe gemessenen Kabinentemperatur. Das Fahrzeug mit normaler Dachverkleidung erreicht in diesem Fall eine maximale Temperatur von 58° C, während das Fahrzeug mit niedrigemittierender Dachverkleidung (hier AI-Folie) eine maximale Temperatur von 51° C annimmt.

Neben der beschriebenen Wirkung der direkten Temperaturabsenkung im Sommer weisen die erfindungsgemäßen Maßnahmen weitere vorteilhafte Effekte auf:
- Die niedrigemittierende Beschichtung der Dachverkleidung und der Scheiben reduziert die Temperatureinstrahlung auf die Insassen trotz der hohen realen Temperaturen ganz erheblich. Dadurch wird der subjektive Überhitzungseffekt nach Einsteigen in das geparkte Fahrzeug wesentlich gemildert.
- Im Winter wird ebenfalls die Behaglichkeit verbessert, weil die LE-Oberflächen die Auskühlung der Insassen aufgrund der Abstrahlung an die kalten Außenflächen verhindern.
- Durch Einsatz der erfindungsgemäßen passiven Kühlmaßnahmen können aktive Kühlvorrichtungen, z.B. Klimaanlagen, elektrisch betriebene Ventilatoren, vermieden oder mit reduzierter Leistung betrieben werden. Dies hat neben verringerten Herstellungs- und Betriebskosten einen entsprechend verminderten Ausstoß von Abgasen zur Folge.

## Patentansprüche

1. Einrichtung zur Klimakontrolle im Kraftfahrzeug, insbesondere bei starker Sonneneinstrahlung, dadurch gekennzeichnet, daß die Dachverkleidung aus einer abgehängten und gut hinterlüfteten Schale besteht, welche beidseitig oder auf der Unterseite mit einer Beschichtung mit niedrigem Wärmeemissionsgrad ε_{IR} zwischen 5% und 15% versehen ist.

2. Einrichtung nach Anspruch 1, dadurch gekennzeichnet, daß die niedrigemittierende Beschichtung eine vorzugsweise mit Aluminium metallisierte Kunststoff-Folie oder eine vorzugsweise mit Aluminium metallisierte Kunstsotff-Schale ist.

3. Einrichtung nach Anspruch 2, dadurch gekennzeichnet, daß die Kunststoff-Folie aus einer dünnen transparenten oder eingefärbten Poly- äthylenfolie mit rückseitiger Metallisierung besteht.

## Claims

1. Arrangement for climate control in a motor vehicle, especially in the case of strong sunshine, characterised in that the roof lining comprises a suspended and well rear-ventilated shell which is provided on both sides or the underside with a coating having a low heat emissivity ε_{iR} of between 5% and 15%.

2. Arrangement according to claim 1, characterised in that the low-emission coating is a plastics film preferably metallised with aluminium or a plastics shell preferably metallised with aluminium.

3. Arrangement according to claim 2, characterised in that the plastics film comprises a thin transparent or coloured polyethylene film having metallisation on its rear side.

## Revendications

1. Dispositif de contrôle de la climatisation d'un véhicule automobile, en particulier en cas de fort rayonnement solaire, caractérisé en ce que le revêtement de toit est constitué d'une coque suspendue et bien aérée à l'arrière, qui est pourvue, sur les deux faces inférieures, d'un revêtement à faible degré d'émission thermique ε_{IR} entre 5 % et 15%.

2. Dispositif selon la revendication 1, caractérisé en ce que le revêtement à faible émission est une feuille de matière plastique métallisée de préférence avec de l'aluminium ou une coque en matière plastique métallisée de préférence avec de l'aluminium.

3. Dispositif selon la revendication 2, caractérisé en ce que la feuille en matière plastique est constituée d'une feuille de polyéthylène mince, transparente ou colorée avec métallisation sur la face arrière.
